Europäisches Patentamt

European Patent Office

Office européen des brevets

(19)

(11) Veröffentlichungsnummer: **0 264 626**
**A2**

# (12) EUROPÄISCHE PATENTANMELDUNG

(21) Anmeldenummer: 87113586.9

(22) Anmeldetag: 17.09.87

(51) Int. Cl.⁴: **C22C 9/00** , C22C 1/00 ,
B23K 35/02 , //B23K11/30

(30) Priorität: 17.10.86 DE 3635370

(43) Veröffentlichungstag der Anmeldung:
27.04.88 Patentblatt 88/17

(84) Benannte Vertragsstaaten:
DE FR GB IT

(71) Anmelder: Battelle-Institut e.V.
Am Römerhof 35 Postfach 900 160
D-6000 Frankfurt/Main 90(DE)

(72) Erfinder: Grünthaler, Karl-Heinz, Dr.
Mozartstrasse 6a
D-6390 Usingen(DE)
Erfinder: Langbein, Dieter, Prof. Dr.
Münzenbergerstrasse 8
D-6380 Bad Homburg(DE)
Erfinder: Nilmen, Fehmi, Dr.
Richard-Wagner-Strasse 64
D-6239 Kriftel/Ts.(DE)
Erfinder: Winter, Heinrich, Dr.
Kurt-Schumacher-Strasse 4
D-6236 Eschborn(DE)

(74) Vertreter: Sartorius, Peter, Dipl.-Ing.
Battelle-Institut e.V. Abteilung Patente Am
Römerhof 35
D-6000 Frankfurt am Main 90(DE)

(54) Verfahren zur Herstellung von dispersionsgehärteten Legierungen auf der Basis von Kupfer.

(57) Die Erfindung betrifft ein Verfahren zur Herstellung von dispersionsgehärteten Legierungen auf der Basis von Kupfer, bei denen eine Wärmeversprödung vermieden wird. Dies wird nach der Erfindung dadurch erreicht, daß der Kupferschmelze Anteile von Molybdän und/oder Wolfram zugefügt werden und das Gemisch um 200 bis zu 1000°C überhitzt und anschließend einer sehr raschen Abkühlung bis zur Erstarrung der Schmelze von mindestens $10^4$ bis $10^{6}°$C/Sek. unterworfen wird.

EP 0 264 626 A2

# Verfahren zur Herstellung von dispersionsgehärteten Legierungen auf der Basis von Kupfer

Die Erfindung betrifft ein Verfahren zur Herstellung von dispersionsgehärteten Legierungen auf der Basis von Kupfer.

Die heute bekannten Verfahren zur Dispersionshärtung von Kupfer gehen entweder von extrem feinen und damit sehr teuren Pulvern des Matrixmetalles aus, das mit dem Dispersoid, zumeist $Al_2O_3$ -oder BeO-Teilchen, sorgfältig vermischt und dann kompaktiert und stranggepreßt wird.

Es werden auch Legerungen des Matrixmetalles mit kleinen Anteilen an leicht oxidierbaren Metallen, wie Beryllium oder Aluminium, zu Pulvern verarbeitet, welche in einer zweiten aufwendigen Stufe einer inneren Oxidation unterzogen werden, die bei richtiger Steuerung des Prozesses zu der gewünschten feinen Verteilung von Oxidteilchen mit einem Durchmesser von weniger als 0,1 μm in der Matrix führt. Dieses Verfahren hat den Nachteil, daß während der internen Oxidation auch Kupfer extern oxidiert wird. Dies macht eine abschließende Reduktionsglühung mit Wasserstoff erforderlich, ·wobei ein Verbacken der Pulver kaum zu vermeiden ist.

Beide bekannten Verfahren sind aufwendig und haben daher nur eine geringe Verbreitung gefunden. Auch die ebenfalls bekannte Simultanfällung von Matrixmetall und Dispersoid aus entsprechenden Metallsalzlösungen ist für eine technische Anwendung zu teuer.

Generell zeigen alle mit Oxiden dieser Art dispersionsgehärteten Metalle, wie Kupfer, eine starke Warmversprödung um etwa 500°C. Dabei fällt die bei Raumtemperatur gute Duktilität mit Dehnungswerten um etwa 20 % mit steigender Temperatur stark ab und erreicht bei etwa 500°C ein Minimum von nur etwa 2%. Dies stellt einen gravierenden Nachteil dieser dispersionsgehärteten Legierungen dar.

Aufgabe der Erfindung ist es, ein einfaches und wirtschaftliches Verfahren zur Herstellung von dispersionsgehärteten Legierungen auf der Basis von Kupfer zu finden, bei dem eine Warmversprödung der Legierungen vermieden wird.

Die Aufgabe ist nach der Erfindung dadurch gelöst, daß der Kupferschmelze Anteile von 1 bis 15 Gew.% Molybdän und/oder Wolfram beigemischt werden, daß das Gemisch um bis zu 1000°C über den Schmelzpunkt des Kupfers überhitzt wird und daß anschließend das Gemisch einer sehr raschen Abkühlung im Bereich von $10^4$ bis $10^{6}$°C/Sek. bis zur Erstarrung der Schmelze unterworfen wird. Durch die Überhitzung läßt sich Molybdän bzw. Wolfram in der Kupferschmelze in Lösung bringen und nach einer sehr raschen Erstarrung als hochwirksames Dispersoid mit einer Teilchengröße von weniger als 0,1 μm in Kupfermaterial ausscheiden. Nach der Erfindung lassen sich somit dispersionsgehärtete Kupferlegierungen direkt aus der Schmelze in wirtschaftlicher Weise herstellen. Das als Dispersoid zugegebene Molbdän bzw. Wolfram verhindert eine Wärmeversprödung der dispersionsgehärteten Kupferlegierungen.

Weitere Merkmale der Erfindung sind in den Ansprüchen 2 bis 11 enthalten. In der nachfolgenden Beschreibung wird das erfindungsgemäße Verfahren näher erläutert.

Bei den der Erfindung zugrundeliegenden Untersuchungen wurde überraschenderweise festgestellt, daß sich Molybdän und Wolfram als Dispersoid für die Herstellung dispersionsgehärteter Kupferlegierungen besonders eignen, weil sie Warmversprödungen verhindern. Bei Temperaturen oberhalb von 1500°C konnten ausreichende Mengen an Molybdän in der zuvor sorgfältig, z.B. mit Aluminium, desoxidierten Kupferschmelze für eine Dispersionshärtung in Lösung gebracht werden. Zur Herstellung von dispersionsgehärteten Kupferlegierungen werden deshalb nach der Erfindung in die Kupferschmelze Zusätze von 1 bis 15 Gew.% an Molybdän und/oder Wolfram, insbesondere in Form von Pulverpreßlingen aus Kupfer-, Wolfram- und Molybdänpulvern, in die zuvor sorgfältig desoxidierte Kupferschmelze eingebracht, wobei diese bis auf 1000°C, vorzugsweise bis auf 200 bis 850°C, über den Schmelzpunkt des Kupfers erhitzt wird. Dabei wird insbesondere unter Schutzgas, wie z.B. Argon, gearbeitet. Diese Schmelze wird im Anschluß daran insbesondere mit Argon verdüst, wobei Erstarrungsgeschwindigkeiten von mehr als $10^{4}$°C/Sek. erreicht werden. Das erhaltene Pulver wird dann zu Strangpreßbolzen kompaktiert und anschließend zu Halbzeug verpreßt.

In weiteren Untersuchungen zeigte es sich, daß die in der Kupfermatrix eingelagerten submikrongroßen Wolfram-und Molybdänteilchen auch nach mehrstündigem Glühen bis zu Temperaturen von 850°C sich nicht vergröbern. Dies zeigt an, daß die Löslichkeit dieser Teilchen bis zu diesen Temperaturen in der Kupfermatrix sehr klein sein muß. Dies ist eine grundlegende Voraussetzung für eine wirksame Dispersionshärtung und eine gute elektrische und thermische Leitfähigkeit.

An einer erfindungsgemäß durch Verdüsen der Schmelze dispersionsgeharteten Kupferlegierung mit 3 Vol.-% einer feinen Dispersion aus Molybdänteilchen mit einem mittleren Teilchendurchmesser von etwa 0,07 μm wurde im stranggepreßten Zustand eine elektrische Leitfähigkeit von 90% von Reinkupfer und bei 800°C eine Warmzugfestigkeit von 15 kp/mm² bei einer Bruchdehnung von 23 % ermittelt. Diese Legierung zeigt also keine Warmversprödung.

Die Legierungen gemäß der Erfindung eignen sich besonders für elektrische Leiter die bei erhöhten Temperaturen beansprucht werden, wie etwa Punktschweißelektroden Kommutatorlamellen und Kontakte. Sie zeigen neben einer hervorragenden elektrischen Leitfähigkeit eine gleichfalls sehr gute Wärmeleitfähigkeit.

Insbesondere für die Herstellung von Kontakten und Punktschweißelektroden eignen sich erfindungsgemäß hergestellte Legierungen mit einem erhöhten Volumenanteil an Molybdänteilchen. Es lassen sich bei Temperaturen um etwa 1800° C etwa 7 Gew.-% Molybdän in der Kupferschmelze in Lösung bringen. Noch größere Anteile bis 15 Gew.-% an Molybdän lassen sich durch das Abschmelzen und Granulieren von selbstverzehrenden, pulvermetallurgisch hergestellte Elektroden im Vakuumlichtbogenofen herstellen, etwa durch Anwendung des REP-Verfahrens (Rotating Electrode Process). Die aus diesen Granulaten hergestellten Strangpreßfolien eignen sich insbesondere zur Herstellung dauerhafter Punktschweißelektroden, insbesondere für das Punktschweißen von verzinkten Blechen.

Darüber hinaus liegt es im Rahmen dieser Erfindung, die extrem schnelle Erstarrung der Schmelzen nach dem Schmelz-Spinnverfahren vorzunehmen. Damit kommt man direkt zu dispersionsgehärteten Bändern, welche durch Walzen kalt verformt werden konnen.

Zur Herstellung der Kupferwolfram-und Kupfermolybdän-Vorlegierungen für die Einbringung in die überhitzte Kupferschmelze eignen sich insbesondere Molybdänteilchen mit einem Durchmesser von etwa 3 bis 15 μm. Diese werden mit Kupferpulver ähnlicher Korngröße gut vermischt und unter dem Druck von etwa 1 bis 3 t/cm² verpreßt und können anschließend unter Schutzgas vorgesintert werden.

## Ansprüche

1. Verfahren zur Herstellung von dispersionsgehärteten Legierungen auf der Basis von Kupfer, **dadurch gekennzeichnet,** daß der Kupferschmelze Anteile von 1 bis 15 Gew.% Molybdän und/oder Wolfram beigemischt werden, daß das Gemisch um bis zu 1.000°C über den Schmelzpunkt des Kupfers überhitzt wird und daß anschließend das Gemisch einer sehr raschen Abkühlung im Bereich von $10^4$ bis $10^{6}$°C/Sek. bis zur Erstarrung der Schmelze unterworfen wird.

2. Verfahren nach Anspruch 1, **dadurch gekennzeichnet,** daß die sehr rasche Abkühlung durch Verdüsen der Schmelze, insbesondere mit inerten Gasen, wie z.B. Argon oder Helium, gegebenenfalls mit geringen Anteilen Wasserstoff erfolgt.

3. Verfahren nach Anspruch 1, **dadurch gekennzeichnet,** daß die sehr rasche Abkühlung durch Abschmelzen und Granulieren von Pulverpreßlingen, z.B. nach dem REP-Verfahren (Rotating Electrode Process), erfolgt.

4. Verfahren nach Anspruch 1, **dadurch gekennzeichnet,** daß die sehr rasche Abkühlung durch direkte Verarbeitung der überhitzten Schmelze zu Bändern, z.B. nach dem Schmelz-Spinn-Verfahren, erfolgt.

5. Verfahren nach einem der Ansprüche 1 bis 4, **dadurch gekennzeichnet,** daß das Molybdän oder Wolfram der Schmelze als feines Pulver zugesetzt wird.

6. Verfahren nach Anspruch 5, **dadurch gekennzeichnet,** daß das Molybdän oder Wolfram in Form von Preßlingen, bestehend aus einem Gemisch von Kupferpulver und Molybdänpulver, in die Schmelze eingebracht wird.

7. Verfahren nach den Ansprüchen 5 oder 6, **dadurch gekennzeichnet,** daß die Kupfer-, Molybdän-und/oder Wolframpulver, welche in die Schmelze eingebracht werden, eine Teilchengröße von 1 bis 20 μm, insbesondere von 3 bis 15 μm, aufweisen.

8. Verfahren nach den Ansprüchen 1 bis 3, **dadurch gekennzeichnet,** daß die rasch erstarrten Granulate zu Strangpreßbolzen verdichtet und im Anschluß daran stranggepreßt werden.

9. Verfahren nach Anspruch 1, **dadurch gekennzeichnet,** daß die Kupferschmelze vor dem Einbringen des Molybdäns und/oder Wolframs, sorgfältig, z.B. mit Aluminium, desoxidiert wird.

10. Dispersionsgehärteter Werkstoff auf der Basis von Kupfer hergestellt nach dem Verfahren nach einem der Ansprüche 1 bis 9, **gekennzeichnet durch** eine in die Kupfermatrix eingelagerte Dispersion von 0,3 bis 15 Gew.% an Molybdän-bzw. Wolframteilchen mit einem Durchmesser von weniger als 0,1 μm.

11. Verwendung des Werkstoffs nach Anspruch 10 für die Herstellung von Punktschweißelektroden, welche insbesondere zum Schweißen von verzinkten Blechen einsetzbar sind.